# EUROPEAN PATENT APPLICATION

(11) **EP 4 834 074 A1**
(43) Date of publication of application: **04.11.2026**
(21) Application number: 23963113.8
(22) Date of filing: 27.12.2023
(51) Int. Cl.: A01C 7/16, A01C 7/20, A01C 15/04

(54) **AGRICULTURAL MATERIAL INJECTION DEVICE**

(71) Applicant: Kubota Corporation, Osaka-shi, Osaka 530-0011 (JP)
(72) Inventor: TORIMOTO, Masaru, Sakai-shi, Osaka 590-0908 (JP)
(74) Representative: Cabinet Beau de Loménie
(86) International application number: PCT/JP2023/046935
(87) International publication number: WO 2025/141764

(57) **Abstract**

There has been a demand for an agricultural material injection apparatus that does not cause problems such as crushing or clogging of agricultural material, and that is capable of forcefully injecting the agricultural material toward a supply target location while keeping a compact shape without increasing the size of the entire apparatus. An agricultural material injection apparatus includes: a gas supply section 32 configured to supply a gas; an injection mechanism configured to inject an agricultural material toward a supply target location by compressing the gas supplied by the gas supply section 32 and ejecting the compressed gas; and a control section H configured to control an operation of the gas supply section 32 and an operation of the injection mechanism, and the gas supply section 32, the injection mechanism, and the control section H are combined into a unit to constitute a material supply module MJ.

## Description

### Technical Field

The present invention relates to an agricultural material injection apparatus configured to supply a granular agricultural material such as seed or fertilizer to a supply target location.

### Background Art

Conventionally, as an example of an agricultural material injection apparatus, there has been a seeding machine configured as follows.

The seeding machine includes a tank that stores seed as an example of an agricultural material, a feed mechanism that feeds the seed from the lower side of the tank, a shooter unit that drives the fed seed in a field, and a cylindrical guide body extending in an up-down direction that guides the seed fed by the feed mechanism to the shooter unit. The shooter unit includes a rotating body having a plurality of blades, which extend radially and are driven to rotate at high speed, and is configured to inject the seed that is fed from the feed mechanism and falls downward through the interior of the guide body, downward using the blades of the rotating body (e.g., see Patent Document 1).

### Prior Art Documents

### Patent Documents

Patent Document 1: WO2021/182108

### Disclosure of the Invention

### Problem to be Solved by the Invention

In the above conventional configuration, the agricultural material needs to be forcefully injected downward by blades, and therefore the rotating body needs to be driven to rotate at high speed. However, since the agricultural material falls freely toward the rotating body rotating at high speed, the agricultural material does not necessarily enter an upstream side of the blades in the rotation direction. For example, the agricultural material may be caught and jammed between a leading end portion of a blade and an inner surface of the cylindrical guide body. In such a state, there is concern that the blades may press the agricultural material against the inner surface of the guide body with great force, causing the agricultural material to be crushed, or causing clogging due to the agricultural material being caught, for example.

In view of this, there has been a demand for an agricultural material injection apparatus that does not cause problems such as crushing or clogging of agricultural material, and that is capable of forcefully injecting the agricultural material toward a supply target location while keeping a compact shape without increasing the size of the entire apparatus.

### Means for Solving Problem

A characteristic configuration of an agricultural material injection apparatus according to the present invention lies in including: a gas supply section configured to supply a gas; an injection mechanism configured to inject an agricultural material toward a supply target location by compressing the gas supplied by the gas supply section and ejecting the compressed gas; and a control section configured to control an operation of the gas supply section and an operation of the injection mechanism, wherein the gas supply section, the injection mechanism, and the control section are combined into a unit to constitute a material supply module.

According to the present invention, the control section controls operation of the gas supply section and the injection mechanism such that the injection mechanism compresses the gas supplied from the gas supply section and ejects compressed gas to inject the agricultural material toward the supply target location. The agricultural material can be supplied to a target location using the thus-ejected gas. Only the compressed gas acts on the agricultural material, and the agricultural material does not collide with objects moving at high speed, nor are the agricultural material caught between the objects.

Further, since the gas supply section, the injection mechanism, and the control section are combined into a unit, the entire apparatus can be made compact compared to a configuration in which these components are separated, individually housed in casings, and supported by support frames or the like.

Accordingly, it is possible to obtain an agricultural material injection apparatus that does not cause problems such as crushing or clogging of agricultural material, and that is capable of forcefully injecting the agricultural material toward a supply target location while keeping a compact shape without increasing the size of the entire apparatus.

In the present invention, preferably, the agricultural material injection apparatus further includes a frame supporting the gas supply section, the injection mechanism, and the control section and surrounding an entirety of the material supply module.

According to this configuration, the gas supply section, the injection mechanism, and the control section are stably supported by the frame surrounding the entire module, with a reduced risk of damage due to contact with external objects.

In the present invention, preferably, the injection mechanism includes: a cylinder tube extending in an up-down direction; a piston configured to slide within the cylinder tube; and a gas ejection section configured to eject the gas supplied into an internal space of the cylinder tube and compressed, downward from a lower portion of the cylinder tube in accordance with movement of the piston.

According to this configuration, a gas is supplied into and compressed in the internal space of the cylinder tube while the piston is stopped. Then, the piston moves to cause the gas ejection section to eject the compressed gas downward. The agricultural material is injected toward a supply target location by the ejected gas. With this configuration, a simple configuration can be adopted in which the gas is injected by compressing the gas and moving the piston.

In the present invention, preferably, the gas supply section, the control section, and the cylinder tube are arranged side by side in an upper area of the material supply module, the gas ejection section extends downward from the lower portion of the cylinder tube through a lower area of the material supply module, and the material supply module has, at a lower end portion thereof, a ground contact support supporting the material supply module in an upright orientation.

According to this configuration, in order to inject the agricultural material while ejecting the gas downward, it is preferable that the gas ejection section includes a guide path that is relatively long in the up-down direction. Accordingly, the gas supply section, the control section, and the cylinder tube are arranged side by side in the upper area, and the gas ejection section is extended from the upper area to the lower area, whereby the entire module can be arranged efficiently and compactly.

In the present invention, preferably, the injection mechanism includes a gas supply and discharge means switchable between a supply state in which the gas is supplied into the internal space of the cylinder tube and a release state in which the internal space is opened to an outside of the cylinder tube, the gas is supplied into and compressed in the internal space of the cylinder tube in response to the gas supply and discharge means switching to the supply state, and the gas compressed in the internal space is discharged to the outside of the cylinder tube in response to the gas supply and discharge means switching to the release state.

According to this configuration, the gas supply and discharge means can perform an operation of supplying and compressing the gas in the internal space of the cylinder tube and an operation of discharging the compressed gas to the outside of the cylinder tube, thereby favorably injecting the agricultural material.

In the present invention, preferably, the injection mechanism includes a plurality of sets each including the cylinder tube, the piston, and the gas ejection section.

According to this configuration, a plurality of sets each including the cylinder tube, the piston, and the gas ejection section are provided. Since the plurality of sets can simultaneously inject the agricultural material, agricultural material injection work can be performed efficiently.

In the present invention, preferably, the gas supply section is a compressor having a power source.

According to this configuration, the compressor uses a drive source such as an electric motor whose rotational speed can be easily adjusted. Thus, when the gas is supplied into the internal space of the cylinder tube, the pressure of gas to be compressed can be changed and adjusted by controlling operation of the drive source.

### Brief Description of the Drawings

FIG. 1 is a front view illustrating a work system.
FIG. 2 is a plan view illustrating the work system.
FIG. 3 is a side view of a seeding apparatus.
FIG. 4 is a longitudinal cross-sectional view of an injection mechanism.
FIG. 5 is an explanatory view illustrating operation of the injection mechanism.
FIG. 6 is a schematic perspective view of a material supply module.
FIG. 7 is a plan view of the material supply module.
FIG. 8 is a front view of the material supply module.
FIG. 9 is a side view of the material supply module.

### Best Mode for Carrying out the Invention

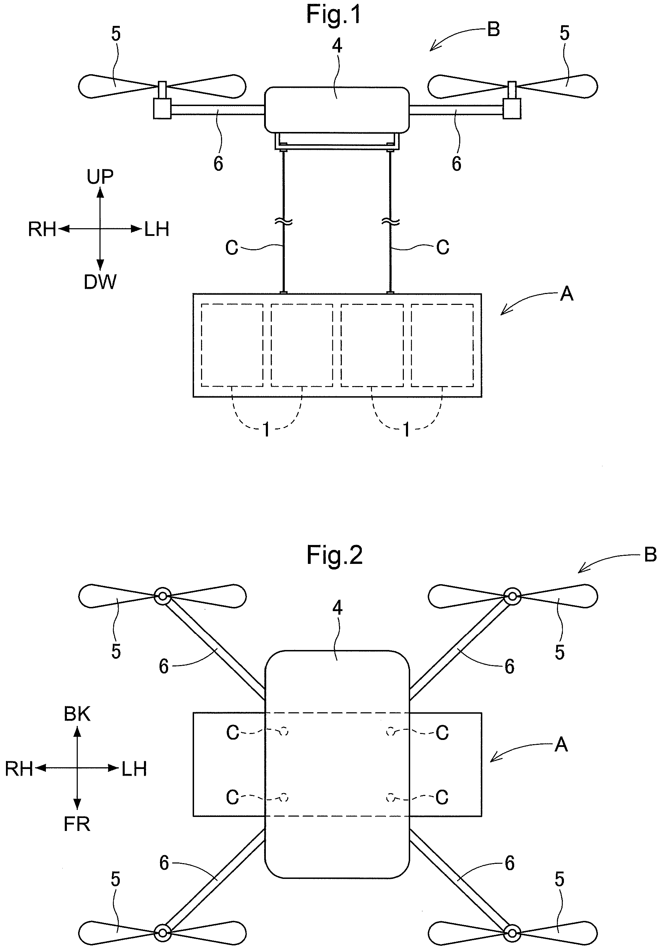

A mode for carrying out the present invention will be described below with reference to the drawings. Note that, unless otherwise stated in the following description, the term "front" refers to the direction indicated by arrow FR in FIG. 2, the term "rear" refers to the direction indicated by arrow BK, the term "left" refers to the direction indicated by arrow LH in FIGS. 1 and 2, and the term "right" refers to the direction indicated by arrow RH. The term "upper/above" refers to the direction indicated by arrow UP in FIG. 1, and the term "lower/below" refers to the direction indicated by arrow DW.

FIGS. 1 and 2 illustrate a work system for supplying an agricultural material to a field. The work system includes a work unit A that includes a plurality of seeding apparatuses 1, each of which is as an example of an agricultural material injection apparatus according to the present invention, an unmanned aircraft B referred to as a drone, and a plurality of connection bodies C for the aircraft B to suspend and support the work unit A. The aircraft B is capable of flying independently. The aircraft B includes a main body 4, a plurality of propellers 5, and a plurality of arms 6.

Although the number of propellers 5 and arms 6 is not particularly limited, four propellers 5 and four arms 6 are provided in the present embodiment. The four arms 6 extend from the main body 4 toward front-left, front-right, rear-left, and rear-right directions, respectively.

Each propeller 5 is driven by driving force of an electric motor (not shown). The aircraft B is capable of flying by driving each propeller 5. That is, by driving the propellers 5, the aircraft B is capable of moving in the up-down direction, the front-back direction, and the left-right direction while floating in the air. The aircraft B is also capable of hovering flight by driving the propellers 5.

Each seeding apparatus 1 is suspended and supported by the main body 4 via a plurality of connection bodies C (e.g., wires). A plurality of seeding apparatuses 1 are arranged side by side at intervals in the left-right direction and integrally combined to constitute the work unit A. Although a case of using four connection bodies C is illustrated as an example, the number thereof is not limited to four and may be changed as appropriate.

The seeding apparatus 1 injects seed, which is an example of an agricultural material, whereby the seed can be driven into and supplied to a field. Although not described in detail, the flight state of the aircraft B is managed such that the seeding apparatus 1 moves along a path along which seeding is to be performed. Here, the aircraft B may repeat movement operation and position-stopping operation, and may perform seeding work during the position-stopping operation. Alternatively, seeding work may be performed while continuously moving by the aircraft B.

Although not illustrated, the aircraft B includes a satellite positioning device having a known configuration, and a flight control section that drives and controls the propellers 5 to control the movement state of the aircraft B. The satellite positioning device receives GNSS (Global Navigation Satellite System) signals from artificial satellites and generates positioning data indicating a position of the aircraft B based on the received signals. As the GNSS, GPS, QZSS, Galileo, GLONASS, BeiDou, or the like can be used. The flight control section drives and controls the propellers 5 based on measurement results of the satellite positioning device and preset field map data such that the aircraft B moves along a predetermined work path.

Next, a configuration of the seeding apparatus 1 will be described.

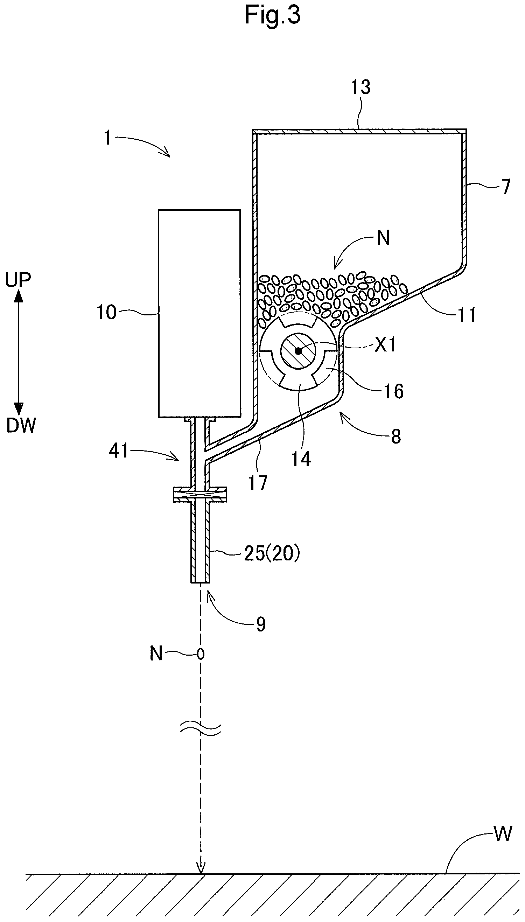

As illustrated in FIG. 3, the seeding apparatus 1 includes a hopper 7 serving as a storage section for storing seed, a feed section 8 that feeds the seed stored in the hopper 7, and an injection mechanism 10 that injects the seed fed by the feed section 8 from an injection outlet 9 toward a field W serving as a supply target location.

The hopper 7 has a storage space surrounded by side walls. An opening is formed at an upper portion of the storage space, through which a large amount of seed N can be loaded. After the seed N is loaded, the opening is closed by a lid 13 that is attachable and detachable. A flow guide section 11 having a tapered shape narrowing toward the lower side is provided at a lower portion of the hopper 7. The seed N can be discharged downward from a lower portion of the flow guide section 11, and a feed roller 14 is provided at a discharging location.

The feed roller 14 is rotatably supported about an axis X1 extending in the left-right direction. Recesses 16 into which the seed N can enter are formed in an outer peripheral portion of the feed roller 14. A plurality of recesses 16 are formed at predetermined intervals in the circumferential direction. The feed roller 14 has a narrow width in the rotation axis direction such that one or several seeds N can enter each recess 16. The feed roller 14 is driven to rotate about the axis X1 by an electric motor (not shown).

As the feed roller 14 rotates, the seed N received in the recesses 16 is discharged downward. A cylindrical supply section 17 that guides the seed N discharged from the feed roller 14 is provided at a lower portion of the hopper 7.

The injection mechanism 10 is provided on a lateral side of the feed section 8, and the seed N fed from the feed section 8 is injected by the injection mechanism 10 and forcefully supplied toward the field W.

The seeding apparatus according to the present embodiment includes a compressor 32 serving as a gas supply section for supplying gas, the injection mechanism 10 that injects the seed N toward the field W by ejecting compressed gas supplied and compressed by the compressor 32, and a control section H that controls operations of the compressor 32 and the injection mechanism 10.

### [Injection Mechanism]

The injection mechanism 10 includes a cylinder tube 21 extending in the up-down direction, a piston 22 that slides within the cylinder tube 21, a gas ejection section 20 that ejects the gas supplied into an internal space of the cylinder tube 21 and compressed, downward from a lower portion of the cylinder tube 21 in accordance with movement of the piston 22, and a gas supply and discharge means 23 that is switchable between a supply state in which it supplies the gas into the internal space of the cylinder tube 21, and a release state in which the internal space is opened to the outside.

The gas supply and discharge means 23 is switchable between the supply state in which the gas is supplied into the internal space of the cylinder tube 21 and the release state in which the internal space is opened to the outside. The gas supply and discharge means 23 discharges the gas supplied in the internal space and compressed to the outside of the cylinder tube 21 from a discharge section 24 formed at a lower portion of the cylinder tube 21 in accordance with movement of the piston 22.

The gas ejection section 20 is provided in communication with the discharge section 24 and is constituted by a cylindrical guide member 25. The guide member 25 has an inner diameter that is smaller than an inner diameter of the cylinder tube 21 and that allows passage of seed.

The injection mechanism 10 will now be described in more detail.

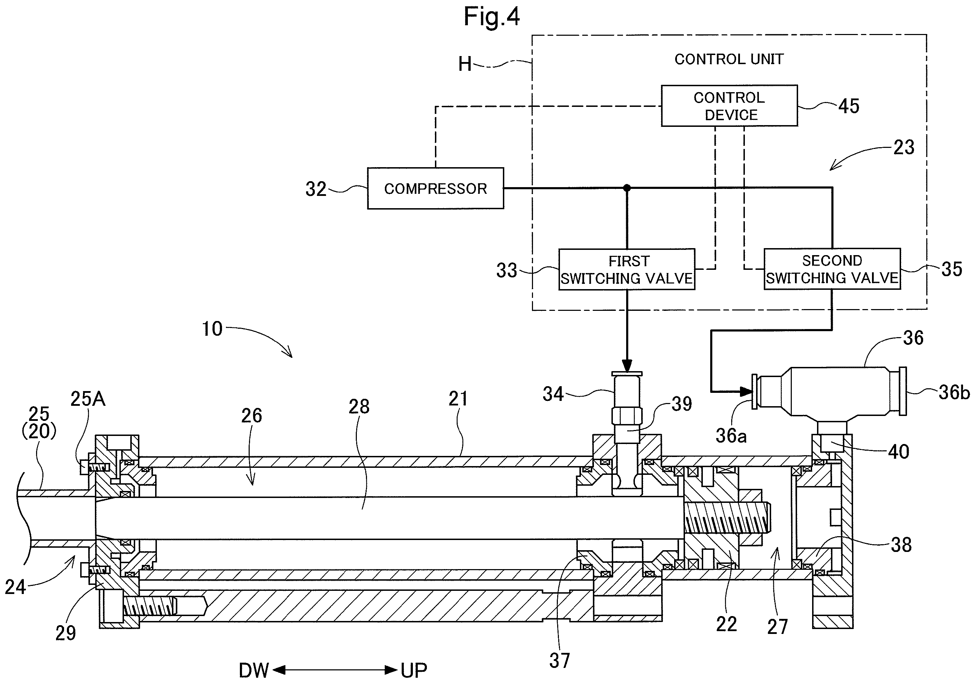

As shown in FIG. 4, the injection mechanism 10 includes the cylinder tube 21 and the piston 22 that slides within the cylinder tube 21. A first gas chamber 26 and a second gas chamber 27 are provided as internal spaces inside the cylinder tube 21. The first gas chamber 26 is located on a first side of the piston 22 in the sliding direction. The second gas chamber 27 is located on a second side of the piston 22 in the sliding direction.

A rod 28 extending in the sliding direction is provided on the first side of the piston 22 in the sliding direction, and the discharge section 24 is provided at an end portion on the first side of the cylinder tube 21 in the sliding direction. The discharge section 24 is configured by forming an opening extending through one sealing block body 29 along the sliding direction. An end portion of the rod 28 on the first side in the sliding direction can be inserted into the opening of the discharge section 24.

The discharge section 24 is closed (as in the state illustrated in FIG. 4) upon the end portion of the rod 28 on the first side in the sliding direction being inserted into the opening of the discharge section 24. Upon the rod 28 sliding toward the second side in the sliding direction, the rod 28 is withdrawn from the opening and the discharge section 24 is opened. That is, the rod 28 is switchable between a closed state in which the rod 28 closes the discharge section 24 and an open state in which the rod 38 opens the discharge section 24 to allow gas ejection, in accordance with movement of the piston 22.

The gas supply and discharge means 23 is provided that is switchable between a supply state in which gas is supplied into the first gas chamber 26 and the second gas chamber 27 of the cylinder tube 21 and a release state in which the first gas chamber 26 and the second gas chamber 27 are opened to the outside.

Specifically, as shown in FIG. 4, the gas supply and discharge means 23 includes a first switching valve 33, a check valve 34, a second switching valve 35, and a quick exhaust valve 36. The gas supply and discharge means 23 switches the supply state of the gas from the compressor 32.

The first switching valve 33 is switchable between a supply state in which the gas is output from the compressor 32 to the first gas chamber 26 and a stop state in which the output is stopped. The second switching valve 35 is switchable between a supply state in which the gas is output from the compressor 32 to the second gas chamber 27 and a stop state in which the output is stopped. In response to the second switching valve 35 being switched to the supply state, the quick exhaust valve 36 allows the gas to be supplied into the second gas chamber 27. In response to the second switching valve 35 being switched to the stop state, the quick exhaust valve 36 is switched to a state of rapidly opening the second gas chamber 27 to the outside while blocking a reverse flow toward the second switching valve 35 with the check valve 34.

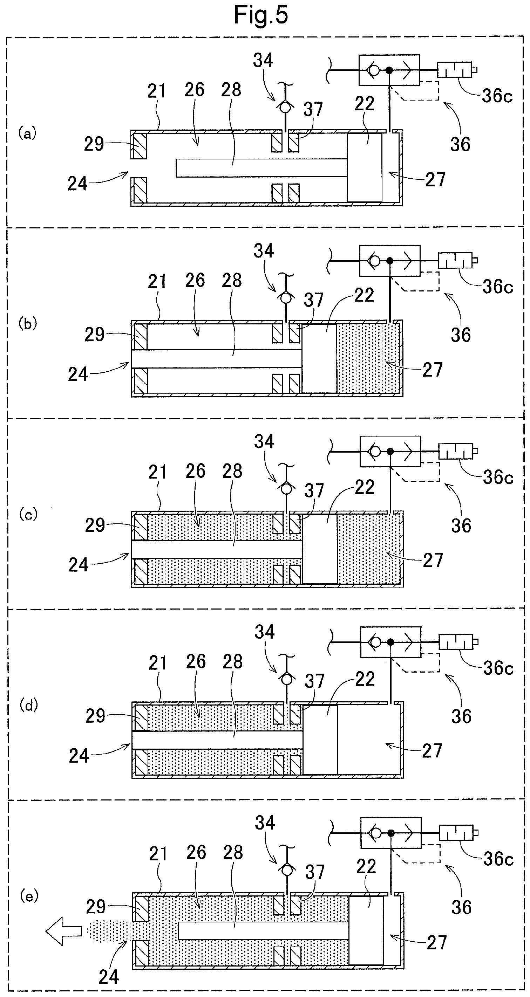

The quick exhaust valve 36 has a well-known configuration, and has an inlet 36a to which the gas is supplied from the second switching valve 35 and a discharge section 36b to which the gas inside the second gas chamber 27 is discharged. The quick exhaust valve 36 also includes a silencer 36c (see FIG. 5) that suppresses discharge noise while the gas inside the second gas chamber 27 is discharged.

The gas supply and discharge means 23 is capable of supplying the gas to the first gas chamber 26 and the second gas chamber 27 while the rod 28 is in a closed state. In response to the gas being supplied into the first gas chamber 26 and the second gas chamber 27, the gas is compressed in each of the first gas chamber 26 and the second gas chamber 27, in which the internal pressure increases. At this time, the rod 28 is maintained in the closed state due to a difference in the area of pressure acting surfaces of the piston 22. Thereafter, in response to the gas supply and discharge means 23 being switched from the supply state to the release state, the compressed gas in the second gas chamber 27 is released, switching the rod 28 to an open state and discharging the compressed gas from the discharge section 24.

A central sealing block body 37 is provided at an intermediate portion of the cylinder tube 21 in the sliding direction. The central sealing block body 37 is formed to be hollow to allow the rod 28 to be inserted. The piston 22 is slidable between the central sealing block body 37 and another sealing block body 38.

The cylinder tube 21 includes a first air supply section 39 and a second air supply section 40. The first air supply section 39 receives the gas supplied from the first switching valve 33. The second air supply section 40 receives the gas supplied from the second switching valve 35 via the quick exhaust valve 36. The first air supply section 39 is provided on the central sealing block body 37. The second air supply section 40 is provided on the other sealing block body 38.

A control device 45 for controlling operations of the compressor 32, the first switching valve 33, and the second switching valve 35 is provided. The control device 45 includes a microcomputer and is configured to execute various operations in the form of a control program. The control device 45 is configured to control operations of the compressor 32, the first switching valve 33, and the second switching valve 35 in accordance with a preset control program. Accordingly, the first switching valve 33, the second switching valve 35, and the control device 45 constitute a seeding control section H serving as a control section that controls operations of the compressor 32 and the injection mechanism 10.

### [Gas Ejection Section]

As shown in FIGS. 3 and 4, a guide member 25 that constitutes the gas ejection section 20 is provided outward of the first side of the cylinder tube 21 in the sliding direction. The guide member 25 is connected in communication with the opening of the discharge section 24. The gas discharged from the discharge section 24 is guided downward through the guide member 25 and discharged from the injection outlet 9 at a leading end thereof.

In response to the rod 28 being switched to the open state with the gas compressed in the internal space of the cylinder tube 21, the gas in the internal space is guided to the injection outlet 9 through the interior of the guide member 25 while maintaining high pressure without abruptly expanding at the discharge section 24. The seed N can be forcefully injected downward by the gas passing through the interior of the guide member 25.

The guide member 25 is mounted to the discharge section 24 of the cylinder tube 21 in an attachable and detachable manner. As shown in FIG. 4, a flange portion 25A is provided on an outer peripheral portion of an upper end portion of the guide member 25, and this flange portion 25A is bolted to an end portion of the cylinder tube 21. The guide member 25 can be removed from the cylinder tube 21 by releasing the bolt joint.

The supply section 17 is connected in communication with an intermediate portion of the guide member 25 in the up-down direction, thereby constituting a seed supply portion 41. The seed N fed from the feed section 8 through the supply section 17 is supplied into the interior of the guide member 25. The supplied seed N is injected toward the field by the gas forcefully ejected from the discharge section 24.

### [Operation of Injection Mechanism]

Next, operations of the injection mechanism 10 will now be described. The operations are controlled by the control device 45 in accordance with a preset control program.

In a standby state illustrated in FIG. 5(a), both the first gas chamber 26 and the second gas chamber 27 are in an open state. In response to the second switching valve 35 being switched to the supply state, the gas is supplied into the second gas chamber 27 of the cylinder tube 21.

As illustrated in FIG. 5(b), in response to the gas being supplied into the second gas chamber 27, the piston 22 slides toward the first side in the sliding direction, and the rod 28 is switched to the closed state in which the discharge section 24 is closed.

As illustrated in FIG. 5(c), in response to a supply of the gas to the first gas chamber 26 being started while the supply of the gas to the second gas chamber 27 is continued, the internal pressure in the first gas chamber 26 and the second gas chamber 27 increases due to compression of the gas. This state corresponds to the supply state of the gas supply and discharge means 23. At this time, the rod 28 is maintained in the closed state. That is, since the area of the pressure acting surface of the piston 22 on the second gas chamber 27 side is greater than the area of the pressure acting surface of the piston 22 on the first gas chamber 26 side, the piston 22 is pushed toward the first gas chamber 26, and the rod 28 is maintained in the closed state.

As illustrated in FIG. 5(d), in response to the first switching valve 33 being switched to the stop state, the compressed gas stored in the second gas chamber 27 is discharged to the outside through the quick exhaust valve 36.

As illustrated in FIG. 5(e), as the internal pressure in the second gas chamber 27 decreases, the piston 22 moves toward the second side in the sliding direction (toward the second gas chamber 27) due to a pressure difference between the first gas chamber 26 and the second gas chamber 27, and the rod 28 enters the open state. This operation corresponds to the gas supply and discharge means 23 being switched to the release state.

As a result, the discharge section 24 is opened, and the compressed gas retained in the first gas chamber 26 is forcefully discharged from the discharge section 24. The gas forcefully discharged from the discharge section 24 is then guided to the injection outlet 9 via the guide member 25, and the seed N fed from the feed section 8 is injected toward the field.

### [Material Supply Module]

The agricultural material injection apparatus according to the present embodiment includes the compressor 32, the injection mechanism 10, and the seeding control section H, which are combined into a unit to constitute a material supply module MJ. Further, the agricultural material injection apparatus includes a frame F that supports the compressor 32, the injection mechanism 10, and the seeding control section H, and that surrounds the entire material supply module.

The compressor 32, the seeding control section H, and the cylinder tube 21 are arranged side by side in this order in an upper area of the material supply module MJ. The gas ejection section 20 extends downward from a lower portion of the cylinder tube 21 through a lower area of the material supply module MJ. The material supply module MJ has, at its lower end portion, a ground contact support 46 that supports the material supply module MJ in an upright orientation. The side-by-side arrangement order of the compressor 32, the control section H, and the cylinder tube 21 is not limited to this configuration and may be changed as appropriate.

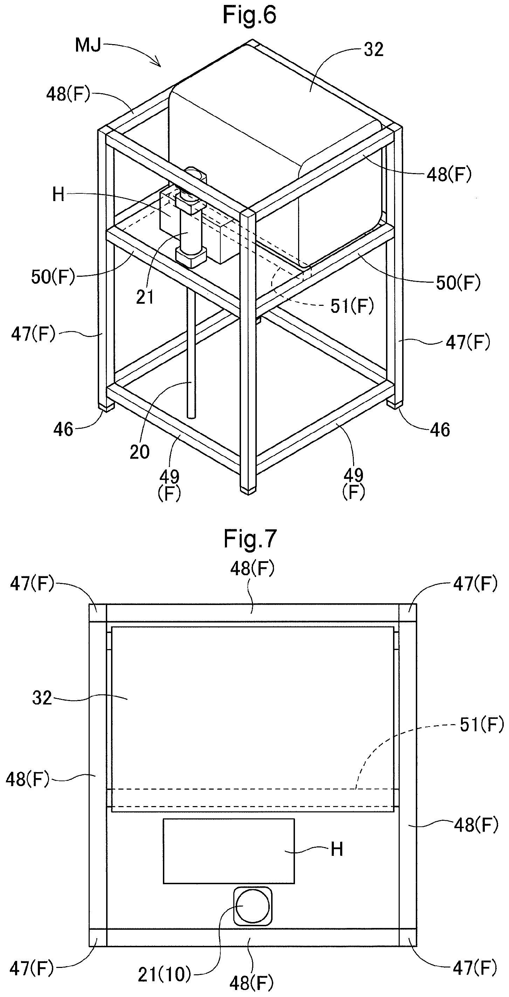

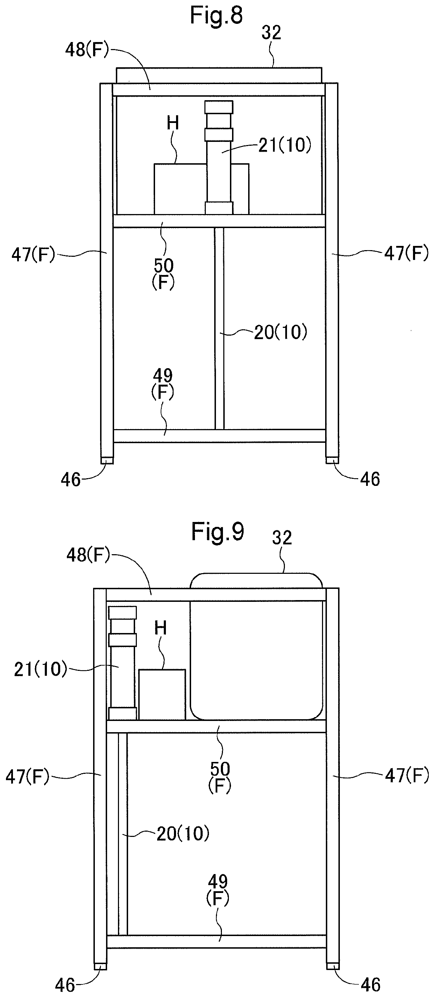

As shown in FIGS. 6 to 9, the frame F includes four support columns 47, four upper frame bodies 48, four lower frame bodies 49, four intermediate frame bodies 50, and a joint body 51. The four upper frame bodies 48 join upper ends of the support columns 47 to each other. The four lower frame bodies 49 join lower ends of the support columns 47 to each other. The four intermediate frame bodies 50 join intermediate portions of the support columns 47 in the up-down direction to each other. The joint body 51 joins intermediate portions of the front and rear intermediate frame bodies 50 to each other. The thus-configured frame F surrounds the entire material supply module MJ.

The compressor 32 is supported by the front and rear intermediate frame bodies 50 and the joint body 51. The seeding control section H is supported by the front and rear intermediate frame bodies 50 and the joint body 51 while being arranged side by side with the compressor 32. The cylinder tube 21 of the injection mechanism 10 is supported by the intermediate frame bodies 50 while being arranged side by side with the seeding control section H. Accordingly, the compressor 32, the seeding control section H, and the cylinder tube 21 are arranged side by side in the upper area of the material supply module MJ.

Lower end portions of the four support columns 47 protrude slightly downward beyond the lower frame bodies 49, and these protruding portions constitute the ground contact support 46. The material supply module MJ can be stably supported on the ground by the four ground contact supports 46. Accordingly, the material supply module MJ has, at its lower end portion, the ground contact supports 46 that support the material supply module MJ in an upright orientation.

The gas ejection section 20 is elongated in the up-down direction, and is provided so as to extend downward from a lower end portion of the cylinder tube 21. Accordingly, the gas ejection section 20 extends downward from the lower portion of the cylinder tube 21 through the lower area of the material supply module MJ.

By configuring the material supply module MJ in this manner, the entire apparatus can be formed in a compact shape. Note that the hopper 7, the feed section 8, and the like are preferably arranged above the material supply module MJ in order to cause the seed to flow downward toward the injection mechanism 10. An empty space in the lower area of the material supply module MJ may be used as a storage section for storing spare seed or as a housing section for accommodating other devices.

### Other Embodiments

(1) A configuration may be adopted in which a single material supply module MJ includes a plurality of sets each including the cylinder tube 21 having the piston 22 and the gas ejection section 20. This type of configuration enables seed (agricultural material) to be injected simultaneously from a plurality of gas ejection sections 20.
(2) The gas supply section (compressor 32), the injection mechanism 10, and the seeding control section H may each be surrounded by an individual frame, and these components may be integrally connected and fixed to each other to constitute a material supply module.
(3) As a gas supply source, the following configuration may be adopted instead of the compressor 32.
   For example, it is possible to adopt various configurations, such as a configuration in which a liquid substance having a property of being easily vaporized is stored in a tank, and gas that is generated due to the liquid evaporating through an on-off valve from an internal space of the tank and forcefully expands from a discharge section is ejected through the on-off valve, and a configuration in which a piston is slid using an actuator to increase pressure in the internal space of the cylinder tube.
(4) A configuration may be adopted in which, as a gas compression section 18, a backflow prevention section that supplies gas from a gas supply source only into the second gas chamber 27 and allows the gas to move only in one direction from the second gas chamber 27 toward the first gas is provided, whereby the gas is compressed not only in the second gas chamber 27 but also in the first gas chamber 26. In this case, simplification of the configuration can be achieved.
(5) The agricultural material is not limited to seed, and fertilizer, a chemical agent, or the like may be injected.
(6) The aircraft B may be of a drive type in which the propellers are driven by an internal combustion engine, or a parallel hybrid drive type in which the propellers are driven using an electric motor and an internal combustion engine. Alternatively, a series hybrid drive type may be adopted in which a generator is driven by an internal combustion engine and an electric motor is driven by generated electric power. The aircraft is not limited to an unmanned flight configuration, and may be configured to fly while being piloted by a person.
(7) A configuration may be adopted in which the work unit A is supported by a traveling vehicle instead of the aircraft B.

### Industrial Applicability

The present invention can be applied to an agricultural material injection apparatus configured to supply a granular agricultural material such as seed or fertilizer to a supply target location.

### Description of Reference Signs

10: Injection mechanism
20: Gas ejection section
21: Cylinder tube
22: Piston
23: Gas supply and discharge means
32: Compressor (gas supply section)
46: Ground contact support
H: Seeding control section (control section)
MJ: Material supply module

## Claims

1. An agricultural material injection apparatus, comprising:
a gas supply section configured to supply a gas;
an injection mechanism configured to inject an agricultural material toward a supply target location by compressing the gas supplied by the gas supply section and ejecting the compressed gas; and
a control section configured to control an operation of the gas supply section and an operation of the injection mechanism,
wherein the gas supply section, the injection mechanism, and the control section are combined into a unit to constitute a material supply module.

2. The agricultural material injection apparatus according to claim 1, further comprising:
a frame supporting the gas supply section, the injection mechanism, and the control section and surrounding an entirety of the material supply module.

3. The agricultural material injection apparatus according to claim 1,
wherein the injection mechanism includes: a cylinder tube extending in an up-down direction; a piston configured to slide within the cylinder tube; and a gas ejection section configured to eject the gas supplied into an internal space of the cylinder tube and compressed, downward from a lower portion of the cylinder tube in accordance with movement of the piston.

4. The agricultural material injection apparatus according to claim 3,
wherein the gas supply section, the control section, and the cylinder tube are arranged side by side in an upper area of the material supply module,
the gas ejection section extends downward from the lower portion of the cylinder tube through a lower area of the material supply module, and
the material supply module has, at a lower end portion thereof, a ground contact support supporting the material supply module in an upright orientation.

5. The agricultural material injection apparatus according to claim 3,
wherein the injection mechanism includes a gas supply and discharge means switchable between a supply state in which the gas is supplied into the internal space of the cylinder tube and a release state in which the internal space is opened to an outside of the cylinder tube,
the gas is supplied into and compressed in the internal space of the cylinder tube in response to the gas supply and discharge means switching to the supply state, and
the gas compressed in the internal space is discharged to the outside of the cylinder tube in response to the gas supply and discharge means switching to the release state.

6. The agricultural material injection apparatus according to claim 3,
wherein the injection mechanism includes a plurality of sets each including the cylinder tube, the piston, and the gas ejection section.

7. The agricultural material injection apparatus according to any one of claims 1 to 6, wherein the gas supply section is a compressor having a power source.
